# DEMANDE DE BREVET EUROPEEN

(11) **EP 4 593 379 A1**
(43) Date de publication de la demande: **30.07.2025**
(21) Numéro de dépôt: 24305137.2
(22) Date de dépôt: 25.01.2024
(51) Int. Cl.: H04N 19/117, H04N 19/174, H04N 19/176, H04N 19/59, H04N 19/86

(54) **PROCÉDÉ ET DISPOSITIF DE TRAITEMENT DE VALEURS RELATIVES À UN CONTENU SONORE OU VISUEL**

(71) Demandeur: Fondation B-COM, 35510 Cesson-Sévigné (FR); Orange, 92130 Issy-les-Moulineaux (FR)
(72) Inventeur: HENRY, Félix, 35760 SAINT-GRÉGOIRE (FR); CLARE, Gordon, 35740 PACÉ (FR)
(74) Mandataire: Jacobacci Coralis Harle

(57) **Abrégé**

Un procédé de traitement de valeurs associées à des échantillons d'un signal représentatif d'un contenu sonore ou visuel, comprend les étapes suivantes :
- répartition (E20) des échantillons au sein d'une pluralité d'ensembles ;
- pour certains au moins des ensembles de la pluralité d'ensembles, décodage (E22) de données (NNCi) représentatives de paramètres définissant un réseau de neurones artificiels associé à l'ensemble concerné et traitement (E24) des valeurs associées aux échantillons de l'ensemble concerné au moyen du réseau de neurones artificiels défini par lesdits paramètres de manière à produire des valeurs traitées respectivement associées aux échantillons de l'ensemble concerné.

Sont également décrits un dispositif associé, ainsi qu'un procédé et un dispositif de génération de paramètres utilisés pour le traitement des valeurs susmentionnées.

## Description

### Domaine technique de l'invention

La présente invention concerne le domaine technique du traitement des contenus sonores ou visuels.

Elle concerne en particulier un procédé et un dispositif de traitement de valeurs relatives à un contenu sonore ou visuel. Elle concerne également un procédé et un dispositif de génération de paramètres utilisés pour le traitement de ces valeurs.

### Etat de la technique

Il a déjà été proposé d'utiliser des réseaux de neurones artificiels dans le traitement des contenus sonores ou visuels.

En particulier, l'article *"*VVC In-Loop Filtering based on Deep Convolutional Neural Network", de Soulef Bouaafia, Seifeddine Messaoud, Randa Khemiri et Fatma Elzahra Sayadi in Computational Intelligence and Neuroscience, Volume 2021 (ID article : 9912839) propose d'utiliser un réseau de neurones artificiels profond, ayant des poids fixes (une fois la phase d'apprentissage effectuée), pour améliorer la qualité d'une vidéo décodée conformément au format VVC (pour *"Versatile Video Coding"*)*.*

### Présentation de l'invention

Dans ce contexte, la présente invention propose un procédé de traitement de valeurs associées à des échantillons d'un signal représentatif d'un contenu sonore ou visuel, comprenant les étapes suivantes :
- répartition des échantillons au sein d'une pluralité d'ensembles ;
- pour certains au moins des ensembles de la pluralité d'ensembles, décodage de données représentatives de paramètres définissant un réseau de neurones artificiels associé à l'ensemble concerné et traitement des valeurs associées aux échantillons de l'ensemble concerné au moyen du réseau de neurones artificiels défini par lesdits paramètres de manière à produire des valeurs traitées respectivement associées aux échantillons de l'ensemble concerné.

Les différents réseaux de neurones artificiels utilisés sont ainsi associés chacun à un des ensembles précités, c'est-à-dire à une sous-partie du signal représentatif du contenu sonore ou visuel. Chaque réseau de neurones artificiels peut ainsi être adapté à la sous-partie du signal concernée.

En outre, on peut ainsi utiliser des réseaux de neurones artificiels ayant une structure relativement simple, définis par un nombre réduit de paramètres, ce qui permet d'utiliser éventuellement un réseau de neurones artificiels à chaque fois différent, adapté au mieux à l'ensemble d'échantillons concerné, sans nécessiter un débit additionnel significatif pour le transport de ces paramètres.

Les valeurs traitées produites comme indiqué ci-dessus pour les différents ensembles d'échantillons participent ainsi à (voire forment) un nouveau signal représentatif (ou autrement dit, une nouvelle représentation) du contenu sonore ou visuel.

D'autres caractéristiques non limitatives et avantageuses du procédé conforme à l'invention, prises individuellement ou selon toutes les combinaisons techniquement possibles, sont les suivantes :
- le signal est représentatif d'au moins une image ;
- les ensembles sont des blocs de pixels contigus de l'image ;
- la répartition des échantillons au sein de la pluralité d'ensembles est réalisée au moyen d'un processus de classification prédéterminé ;
- le réseau de neurones artificiels défini par lesdits paramètres comprend au maximum trois couches incluant une couche d'entrée et une couche de sortie ;
- les valeurs associées aux échantillons du signal sont obtenues par décodage d'un flux de données codé par une technique de compression avec perte ;
- les réseaux de neurones artificiels respectivement associés aux ensembles ont une structure prédéterminée.

Le procédé peut comprendre une étape préalable de détermination d'au moins une taille des blocs de pixels mentionnés ci-dessus.

Le procédé peut par ailleurs comprendre une étape préalable de réception de paramètre de classification. La répartition des échantillons au sein de la pluralité d'ensembles peut alors être réalisée au moyen d'un processus de classification paramétré par les paramètres de classification reçus.

Selon une possibilité de réalisation, le procédé peut comprendre une étape préalable de décodage de poids définissant un réseau de neurones artificiels de classification. La répartition des échantillons au sein de la pluralité d'ensemble peut alors être réalisée au moyen de ce réseau de neurones artificiels de classification.

Le procédé peut par ailleurs comprendre une étape préalable de décodage d'une information représentative du nombre d'ensembles dans la pluralité d'ensembles.

Selon une possibilité de réalisation, le procédé peut comprendre une étape préalable de décodage d'un indicateur commandant la mise en oeuvre des étapes de répartition, de décodage desdites données représentatives et de traitement.

Le procédé peut par ailleurs comprendre une étape préalable d'association du réseau de neurones artificiels à l'ensemble concerné sur la base d'une table d'association.

L'invention propose également un dispositif de traitement de valeurs associées à des échantillons d'un signal représentatif d'un contenu sonore ou visuel, comprenant :
- une unité de répartition des échantillons au sein d'une pluralité d'ensembles ;
- une unité de décodage configurée pour décoder, pour certains au moins des ensembles de la pluralité d'ensembles, des données représentatives de paramètres définissant un réseau de neurones artificiels associé à l'ensemble concerné ; et
- une unité de traitement configurée pour traiter les valeurs associées aux échantillons d'au moins un ensemble au moyen du réseau de neurones artificiels défini par lesdits paramètres obtenus par l'unité de décodage pour cet ensemble, de manière à produire des valeurs traitées respectivement associées aux échantillons de cet ensemble.

L'invention propose par ailleurs un procédé de génération de paramètres utilisés pour le traitement de valeurs associées à des échantillons d'un signal représentatif d'un contenu sonore ou visuel, comprenant les étapes suivantes :
- répartition des échantillons au sein d'une pluralité d'ensembles ;
- pour certains au moins des ensembles de la pluralité d'ensembles, détermination de paramètres définissant un réseau de neurones artificiels associé à l'ensemble concerné et minimisant une distance entre des valeurs de référence associées aux échantillons de l'ensemble concerné au sein d'un signal de référence et des valeurs améliorées obtenues par traitement, au moyen de ce réseau de neurones artificiels, des valeurs associées aux échantillons dudit signal représentatif compris dans l'ensemble concerné.

Ce procédé peut comprendre une étape de codage des paramètres déterminés pour lesdits certains au moins des ensembles de la pluralité d'ensembles.

L'invention propose aussi un dispositif de génération de paramètres utilisés pour le traitement de valeurs associées à des échantillons d'un signal représentatif d'un contenu sonore ou visuel, comprenant :
- une unité de répartition des échantillons au sein d'une pluralité d'ensembles ; et
- une unité d'apprentissage configurée pour déterminer, pour certains au moins des ensembles de la pluralité d'ensembles, des paramètres définissant un réseau de neurones artificiels associé à l'ensemble concerné et minimisant une distance entre des valeurs de référence associées aux échantillons de l'ensemble concerné au sein d'un signal de référence et des valeurs améliorées obtenues par traitement, au moyen de ce réseau de neurones artificiels, des valeurs associées aux échantillons dudit signal représentatif compris dans l'ensemble concerné.

L'invention propose enfin un programme d'ordinateur comprenant des instructions exécutables par un processeur et conçues pour mettre en oeuvre l'un des procédés proposés ci-dessus, lorsque ces instructions sont exécutées par le processeur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
- la figure 1 représente schématiquement un système comprenant un dispositif de codage et un dispositif de reconstruction de contenu ;
- la figure 2 est un logigramme représentant un procédé mis en oeuvre dans le système de la figure 1 ;
- la figure 3 représente un premier exemple de réseau de neurones artificiels utilisable dans le système de la figure 1 ou le procédé de la figure 2 ; et
- la figure 4 représente un second exemple de réseau de neurones artificiels utilisable dans le système de la figure 1 ou le procédé de la figure 2.

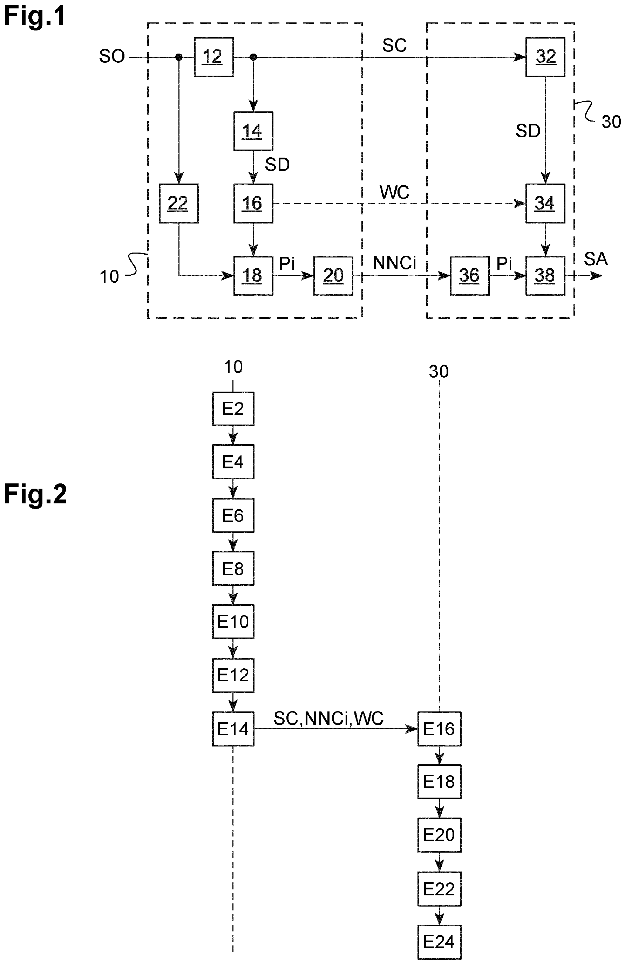

La figure 1 représente un système comprenant un dispositif de codage 10 et un dispositif de reconstruction de contenu 30.

Le dispositif de codage 10 reçoit en entrée un signal initial SO représentatif d'un contenu sonore ou visuel. Ce contenu sonore ou visuel est par exemple une image, une séquence vidéo ou un contenu audio (tel qu'un enregistrement sonore).

Le signal initial (ou signal original) SO est formé d'une pluralité d'échantillons ayant chacun une valeur.

Par exemple, dans le cas d'un contenu visuel comportant au moins une image, le signal initial SO peut être formé de plusieurs composantes (par exemple des composantes de couleurs) formées chacune d'une matrice de pixels (ces pixels étant les échantillons susmentionnés). Les valeurs des pixels peuvent dans ce cas représenter les intensités respectivement associées à ces pixels pour la composante concernée.

Dans le cas d'un contenu sonore, les valeurs des échantillons peuvent être par exemple des valeurs successives d'intensité sonore sur un intervalle de temps donné.

Dans l'exemple décrit ici, le dispositif de codage 10 comprend une unité de codage de contenu 12 configurée pour coder le signal initial SO à l'aide d'une technique de compression (avec perte) permettant d'obtenir (en sortie de l'unité de codage de contenu 12) un signal codé SC. La technique de compression utilisée permet d'obtenir, au moins la plupart du temps, un signal codé SC dont la transmission nécessite moins de données que la transmission du signal initial SO.

Lorsque le contenu initial SO comprend au moins une image, la technique de compression utilisée est par exemple de type JPEG, PNG, AVC-intra (selon la norme MPEG-4 AVC), HEVC-intra (selon la norme MPEG-H HEVC) ou WC-intra (selon la norme MPEG-I partie 3).

Le dispositif de codage 10 peut alors comprendre dans ce cas une unité de décodage de contenu 14 configurée pour produire un signal décodé SD sur la base du signal codé SC.

L'unité de décodage de contenu 14 est conçue de manière à produire un signal décodé SD représentant un contenu (sonore ou visuel) proche du contenu (sonore ou visuel) représenté par le signal initial SO. Pour ce faire, l'unité de décodage de contenu 14 effectue un décodage correspondant au codage (ou technique de compression) mis en oeuvre par l'unité de codage de contenu 12. Toutefois, du fait de la compression susmentionnée (réalisée avec perte), le contenu (sonore ou visuel) représenté par le signal décodé SD n'est la plupart du temps pas identique au contenu (visuel ou sonore) représenté par le signal initial SO.

Comme expliqué dans la suite, le dispositif de reconstruction de contenu 30 comprend une unité de décodage de contenu 32 du même type que (voire identique à) l'unité de décodage de contenu 14.

Le dispositif de codage 10 comprend en outre une première unité de répartition 16 configurée pour répartir les échantillons du signal décodé SD en une pluralité d'ensembles d'échantillons.

Divers exemples de méthode de répartition des échantillons en une pluralité d'ensembles d'échantillons sont donnés dans la suite dans le cadre de la description de la figure 2.

Dans certains modes de réalisation, comme expliqué dans la suite, la première unité de répartition 16 génère des données de répartition (par exemple des poids WC d'un réseau de neurones artificiels de classification) à transmettre (après codage éventuel) au dispositif de reconstruction de contenu 30 afin de permettre une répartition identique des échantillons lors de la reconstruction du contenu (cette répartition identique étant ici effectuée au sein du dispositif de reconstruction de contenu 30 par une unité de répartition 34 décrite plus loin).

Le dispositif de codage 10 comprend par ailleurs une seconde unité de répartition 22 configurée pour répartir les échantillons du signal initial SO en une pluralité d'ensembles d'échantillons, selon un processus de répartition identique à celui utilisé par la première unité de répartition 16.

Le dispositif de codage 10 comprend une unité d'apprentissage 18 et une unité de codage de paramètres 20 qui traitent séparément les différents ensembles d'échantillons produits par la première unité de répartition 16 (et les ensembles correspondants produits par la seconde unité de répartition 22).

Selon une première possibilité de réalisation envisageable, l'unité d'apprentissage 18 comme l'unité de codage de paramètres 20 traite successivement les différents ensembles d'échantillons produits par la première unité de répartition 16 (comme expliqué ci-dessous).

Selon une seconde possibilité de réalisation envisageable, le dispositif de codage 10 comprend plusieurs unités d'apprentissage 18 et plusieurs unités de codage de paramètres 20. Plusieurs ensembles d'échantillons (parmi les ensembles d'échantillons produits par la première unité de répartition 16) peuvent alors être traités en parallèle (au même moment) respectivement par les différentes unités d'apprentissage 18 et les différentes unités de codage de paramètres 20.

Dans les deux cas, pour un ensemble d'échantillons en cours de traitement par l'unité d'apprentissage 18, l'unité d'apprentissage 18 est configurée pour :
- recevoir en entrée les valeurs (valeurs de référence) associées aux échantillons de cet ensemble au sein du signal initial SO (qui est ici le signal de référence) et les valeurs associées aux échantillons de cet ensemble au sein du signal décodé SD ;
- déterminer des paramètres Pi définissant un réseau de neurones artificiels associé à l'ensemble d'échantillons en cours de traitement et minimisant une distance entre les valeurs de référence précitées et des valeurs améliorées obtenues par traitement, au moyen de ce réseau de neurones artificiels, des valeurs associées aux échantillons du signal décodé SD compris dans l'ensemble d'échantillons en cours de traitement.

La distance susmentionnée est par exemple une erreur quadratique, une distance utilisant la norme L1 (ou distance de Manhattan) ou un rapport signal-à-bruit.

Le processus d'apprentissage mis en oeuvre par l'unité d'apprentissage 18 pour déterminer les paramètres Pi susmentionnés est décrit de manière plus détaillée ci-dessous dans le cadre de la description de la figure 2.

Les paramètres Pi sont utilisés comme expliqué dans la suite pour le traitement de valeurs associées à des échantillons d'un signal représentatif d'un contenu sonore ou visuel ; le dispositif de codage 10 est donc un exemple de dispositif de génération de paramètres utilisés pour le traitement de valeurs associées à des échantillons d'un signal représentatif d'un contenu sonore ou visuel.

L'unité de codage de paramètres 20 reçoit en entrée les paramètres Pi déterminés (par l'unité d'apprentissage 18) pour l'ensemble d'échantillons en cours de traitement (ces paramètres Pi définissant le réseau de neurones artificiels associé à l'ensemble d'échantillons en cours de traitement) ; l'unité de codage de paramètres 20 est configurée pour produire, sur la base de ces paramètres déterminés Pi reçus en entrée, des données NNCi représentatives de ces paramètres déterminés Pi.

L'unité de codage de paramètres 20 produit par exemple ces données représentatives NNCi par codage des paramètres déterminés Pi conformément à la norme de compression MPEG-7 partie 17. D'autres méthodes de codage des données représentatives NNCi sont possibles, telles que l'application d'une quantification scalaire uniforme et un codage de Huffman.

Le dispositif de codage 10 peut comprendre une unité de communication (non représentée) configurée pour transmettre (via un canal de communication) le signal codé SC, les données représentatives NNCi et, le cas échéant, les données de répartition WC (éventuellement sous forme codée) à destination du dispositif de reconstruction de contenu 30. En variante, en particulier lorsque le dispositif de codage 10 et le dispositif de reconstruction de contenu 30 équipent un même appareil électronique, le signal codé SC, les données représentatives NNCi et, le cas échéant, les données de répartition WC peuvent être mémorisés dans une unité de mémorisation (par exemple une mémoire) de cet appareil électronique.

Chacune des unités 12, 14, 16, 18, 20, 22 mentionnées ci-dessus peut en pratique être mise en oeuvre du fait de l'exécution d'instructions de programme d'ordinateur par un processeur du dispositif de codage 10. Dans ce cas, ces instructions de programme d'ordinateur sont par exemple conçues pour mettre en oeuvre le procédé décrit ci-dessous en référence à la figure 2 et comprenant les étapes E2 à E14.

En variante toutefois, certaines au moins des unités 12, 14, 16, 18, 20, 22 mentionnées ci-dessus pourraient être mises en oeuvre par un circuit électronique dédié, par exemple un circuit intégré à application spécifique.

Le dispositif de reconstruction de contenu 30 comprend une unité de décodage de contenu 32, une unité de répartition 34, une unité de décodage de paramètres 36 et une unité de traitement 38.

Chacune des unités 32, 34, 36, 38 peut en pratique être mise en oeuvre du fait de l'exécution d'instructions de programme d'ordinateur par un processeur du dispositif de reconstruction de contenu 30. Dans ce cas, ces instructions de programme d'ordinateur sont par exemple conçues pour mettre en oeuvre le procédé décrit ci-dessous en référence à la figure 2 et comprenant les étapes E16 à E18.

En variante toutefois, certaines au moins des unités 32, 34, 36, 38 mentionnées ci-dessus pourraient être mises en oeuvre par un circuit électronique dédié, par exemple un circuit intégré à application spécifique.

Le dispositif de reconstruction de contenu 30 peut également comprendre une unité de réception (non représentée) configurée pour recevoir (via le canal de communication déjà mentionné) le signal codé SC, les données représentatives NNCi et, le cas échéant, les données de répartition WC en provenance du dispositif de codage 10. Dans la variante déjà mentionnée (utilisable en particulier lorsque le dispositif de codage 10 et le dispositif de reconstruction de contenu 30 équipent un même appareil électronique), le signal codé SC, les données représentatives NNCi et, le cas échéant, les données de répartition WC (éventuellement sous forme codée) peuvent être lues dans l'unité de mémorisation de l'appareil électronique.

L'unité de décodage de contenu 32 est configurée pour décoder le signal codé SC (reçu du dispositif de reconstruction de contenu 30 en provenance du dispositif de codage 10) de manière à produire le signal décodé SD déjà mentionné.

En effet, comme déjà indiqué, l'unité de décodage de contenu 32 est du même type que (voire identique à) l'unité de décodage de contenu 14 qui équipe le dispositif de codage 10. Les explications données ci-dessus à propos de l'unité de décodage de contenu 14 s'applique donc également à l'unité de décodage de contenu 32.

En particulier, l'unité de décodage de contenu 32 effectue un décodage correspondant au codage (ou technique de compression, ici avec perte) mis en oeuvre par l'unité de codage de contenu 12.

Le signal décodé SD produit par l'unité de décodage de contenu 32 (sur la base du signal codé SC) comprend des échantillons ayant chacun une valeur et est ainsi représentatif d'un contenu sonore ou visuel.

Comme déjà indiqué à propos du signal initial SO, dans le cas d'un contenu visuel comportant au moins une image, le signal décodé SD peut être formé de plusieurs composantes (par exemple des composantes de couleurs) formées chacune d'une matrice de pixels (ces pixels étant les échantillons susmentionnés). Les valeurs des pixels peuvent dans ce cas représenter les intensités respectivement associées à ces pixels pour la composante concernée.

Dans le cas d'un contenu sonore, dans le signal décodé SD également, les valeurs des échantillons peuvent être par exemple des valeurs successives d'intensité sonore sur un intervalle de temps donné.

Comme déjà indiqué plus haut, du fait de la compression (avec perte) utilisée lors du codage (par le dispositif de codage de contenu 12), le signal décodé SD n'est la plupart du temps pas identique au signal initial SO, que l'unité de reconstruction de signal 30 cherche à reconstruire au mieux.

Pour ce faire, les valeurs des échantillons du signal décodé SD sont traitées par l'unité de répartition 34 et l'unité de traitement 38 comme expliqué à présent.

L'unité de répartition 34 est configurée pour répartir les échantillons du signal décodé SD en une pluralité d'ensembles d'échantillons selon une répartition identique à celle utilisée par la première unité de répartition 16. Divers exemples de répartitions possibles sont donnés dans la suite.

Dans certains cas, l'unité de répartition 34 peut répartir les échantillons du signal décodé SD sans nécessiter une information complémentaire. C'est notamment le cas lorsque l'unité de répartition répartit les données de manière prédéfinie au sein des différents ensembles d'échantillons. C'est par exemple le cas lorsque le contenu sonore ou visuel comprend au moins une image, que les échantillons sont les pixels de l'image (ou d'une composante de l'image) et que les ensembles d'échantillons sont des blocs prédéfinis de pixels adjacents de l'image.

Dans d'autres cas, l'unité de répartition 34 peut utiliser les données de répartition WC reçues du dispositif de codage 10 (et précisément de la première unité de répartition 16) pour déterminer comment les échantillons du signal décodé SD doivent être répartis au sein des ensembles d'échantillons.

Par exemple, lorsque l'unité de répartition 34 utilise un réseau de neurones artificiels de classification pour effectuer la répartition (comme expliqué de manière plus détaillée dans la suite), le réseau de neurones artificiels de classification peut être défini notamment au moyen de poids WC reçus (en tant que données de répartition) (et éventuellement décodés) en provenance du dispositif de codage 10 (et précisément de la première unité de répartition 16).

Pour au moins un des ensembles d'échantillons obtenus par l'unité de répartition 34, l'unité de décodage de paramètres 36 est configurée pour décoder des données NNCi représentatives de paramètres Pi définissant un réseau de neurones artificiels qui est alors associé à l'ensemble d'échantillons concerné.

Ces données représentatives sont ici les données représentatives NNCi produites par l'unité de codage de paramètres 20 pour l'ensemble d'échantillons concerné, comme décrit ci-dessus.

Le décodage effectué par l'unité de décodage de paramètres 36 est par exemple réalisé conformément à ce que prévoit la norme MPEG-7 partie 17 déjà mentionnée.

L'unité de décodage de paramètres 36 génère ainsi ici des paramètres Pi définissant un réseau de neurones artificiels (successivement) pour chaque ensemble d'échantillons obtenu en sortie de l'unité de répartition 34.

En variante, le dispositif de reconstruction de contenu 30 pourrait comprendre plusieurs unités de décodage de paramètres de manière à décoder en parallèle plusieurs jeux de données représentatives de paramètres et à fournir ainsi en parallèle plusieurs jeux de paramètres, chaque jeu de paramètres définissant un réseau de neurones associé à un ensemble d'échantillons.

Pour au moins un ensemble d'échantillons (et ici successivement pour chacun des ensembles d'échantillons obtenus en sortie de l'unité de répartition 34), l'unité de traitement 38 est configurée pour traiter, au moyen du réseau de neurones artificiels défini par les paramètres Pi obtenus par l'unité de décodage de paramètres 36 pour cet ensemble, les valeurs associées (au sein du signal décodé SD) aux échantillons de cet ensemble d'échantillons. Pour chaque ensemble d'échantillons, les valeurs associées (au sein du signal SD) aux échantillons de cet ensemble sont par exemple données (i.e. transmises, éventuellement par l'intermédiaire d'au moins un filtre) à une couche d'entrée du réseau de neurones artificiels associé à l'ensemble d'échantillons concerné ; pour chaque ensemble d'échantillons, le réseau de neurones artificiels concerné peut alors produire sur une couche de sortie des valeurs traitées respectivement relatives aux échantillons de cet ensemble d'échantillons.

En variante, le dispositif de reconstruction de contenu 30 pourrait comprendre plusieurs unités de traitement de manière à traiter en parallèle les valeurs d'échantillons de plusieurs ensembles d'échantillons, les valeurs des échantillons d'un ensemble d'échantillons étant dans ce cas également traitées au moyen du réseau de neurones associé à cet ensemble d'échantillons (c'est-à-dire au moyen du réseau de neurones défini par les paramètres décodés par l'unité de décodage de paramètre 36 pour cet ensemble d'échantillons).

Les valeurs d'échantillon obtenues par traitement pour tous les ensembles d'échantillons forment un signal sonore ou visuel de sortie, noté SA dans la suite.

Grâce à la manière dont sont générés les paramètres Pi définissant les réseaux de neurones artificiels respectivement associés aux ensembles d'échantillons (comme expliqué ci-dessus à propos de l'unité d'apprentissage 18 et détaillé plus loin dans le cadre de la description de la figure 2), le traitement appliqué aux valeurs des échantillons au moyen de ces réseaux de neurones artificiels (chaque réseau de neurones artificiels étant utilisé dans le traitement des valeurs des échantillons d'un ensemble d'échantillons associé à ce réseau de neurones artificiels) permet d'améliorer la qualité de la reconstruction effectuée par le dispositif de reconstruction de contenu 30. Autrement dit, le signal (sonore ou visuel) de sortie SA est amélioré relativement au signal décodé SD, c'est-à-dire que le signal de sortie SA est plus proche du signal initial SO que le signal décodé SD n'est proche du signal initial SO.

Le dispositif de reconstruction de signal 30 est un exemple de dispositif de traitement de valeurs associées à des échantillons d'un signal représentatif d'un contenu sonore ou visuel tel que proposé par l'invention.

Dans cet exemple, les valeurs traités sont les valeurs des échantillons du signal décodé SD, obtenues par l'unité de décodage de contenu 32 (par décodage d'un flux de données codé par une technique de compression avec perte).

Selon une autre possibilité de mise en oeuvre, les valeurs traitées peuvent être obtenues par sur-échantillonage d'une représentation ayant une résolution inférieure. Le contenu sonore ou visuel est dans ce cas représenté par un signal de départ ayant une basse résolution, formé un premier nombre d'échantillons. Le signal de départ peut alors être sur-échantilloné en un signal ayant une résolution supérieure à cette basse résolution, c'est-à-dire un signal formé d'un second nombre d'échantillons supérieur au premier nombre d'échantillons. Le dispositif de traitement conforme à l'invention peut alors traiter les valeurs des échantillons du signal de résolution supérieure de manière à améliorer ce signal de résolution supérieure (c'est-à-dire en pratique de rapprocher les valeurs ainsi traitées des valeurs d'une version originale du signal ayant cette résolution supérieure).

La figure 2 est un logigramme représentant un procédé mis en oeuvre dans le système de la figure 1.

Ce procédé débute par une étape E2 d'obtention du signal initial (ou signal original) SO.

Lorsque le contenu représenté par le signal initial SO est un contenu visuel comprenant au moins une image, l'étape d'obtention E2 peut comprendre une étape de capture de cette image au moyen d'un dispositif de capture d'image, tel qu'un appareil photo ou une caméra vidéo, afin d'obtenir le signal initial SO.

Lorsque le contenu représenté par le signal initial SO est un contenu sonore, l'étape d'obtention du signal initial SO est par exemple réalisée au moyen d'au moins un microphone.

Le procédé comprend ensuite une étape E4 de codage du signal initial SO (ici au moyen de l'unité de codage de contenu 12) de manière à obtenir un signal codé SC.

Comme déjà indiqué, lorsque le signal initial SO contient au moins une image, le signal codé est par exemple compressé (avec perte) conformément à l'une des normes suivantes : JPEG, PNG, AVC-intra, HEVC-intra, WC-intra.

Le procédé se poursuit par une étape E6 de décodage du signal codé SC de manière à obtenir un signal décodé SD. Cette étape E6 est ici réalisée par l'unité de décodage de contenu 14. La technique de décodage utilisée lors de cette étape E6 est associée à la technique de codage (ou technique de compression) utilisée lors de l'étape E4. Le décodage de l'étape E4 vise à obtenir un signal décodé SD relativement proche du signal initial SO, mais qui n'est en général pas identique à ce signal du fait de la compression (avec perte) utilisée pour obtenir le signal décodé SD.

Le signal décodé SD comprend des valeurs respectivement associées à divers échantillons (ces échantillons pouvant être par exemple comme déjà indiqué des pixels d'une composante d'une image lorsque le contenu représenté par le signal décodé SD comprend une telle image).

Le procédé de la figure 2 comprend alors une étape E8 de répartition des échantillons du signal décodé SD au sein d'une pluralité d'ensembles d'échantillons. Cette étape E8 est ici réalisée par la première unité de répartition 16.

Selon un premier mode de réalisation envisageable, les échantillons sont répartis au sein d'un nombre prédéterminé N d'ensembles d'échantillons, selon une règle prédéterminée utilisant la position de chaque échantillon au sein du signal.

Par exemple, lorsque le signal décodé SD représente un contenu visuel comprenant une image, l'image est divisée en blocs de pixels adjacents (ou contigus) de dimensions WxH prédéfinies et chaque bloc de pixels ainsi constitué forme un ensemble d'échantillons.

Selon un second mode de réalisation envisageable, les échantillons sont répartis au sein d'un nombre variable d'ensembles d'échantillons, ici encore selon une règle utilisant la position de chaque échantillon au sein du signal. Des données de répartition indiquant le nombre d'ensembles d'échantillons et/ou la méthode de répartition peuvent dans ce cas être transmises du dispositif de codage 10 au dispositif de reconstruction de contenu 30, comme déjà mentionné.

Lorsque le signal décodé SD représente un contenu visuel comprenant une image, on peut par exemple tester lors de l'étape E8 plusieurs types de division de l'image pour obtenir des blocs de pixels (qui correspondent aux ensembles d'échantillons) et choisir (par mise en oeuvre anticipée des étapes suivantes du procédé) le type de division qui permet la plus forte amélioration du signal à l'étape E24 décrite ci-dessous. On entend par exemple par *"type de division"* une division de l'image en blocs définie par des dimensions particulières des blocs.

Selon un troisième mode de réalisation, les échantillons sont répartis au sein des ensembles d'échantillons selon une règle ou un processus de classification utilisant les valeurs respectivement associées aux échantillons.

Cette règle ou ce processus de classification peut être prédéterminé(e) ou, en variante, paramétrable. Si la règle ou le processus de classification est paramétrable, les paramètres de classification définissant la règle ou le processus de classification peuvent être déterminés par la première unité de répartition 16 (par exemple par mise en oeuvre anticipée des étapes suivantes du procédé, les paramètres de classification choisis étant ceux qui permettent la plus forte amélioration du signal à l'étape E24 décrite ci-dessous) et transmis (en tant que données de répartition) de la première unité de répartition 16 à l'unité de répartition 34.

Par exemple, les ensembles d'échantillons peuvent être associés (respectivement et de manière prédéfinie) à des plages de valeurs envisageables (règle de répartition prédéterminée) ; en variante, les ensembles d'échantillons peuvent par exemple être associés à des plages de valeurs variables, définies par des paramètres de classification (règle paramétrable) qui seront transmis (en tant que données de répartition) au dispositif de reconstruction de contenu 30. Dans les deux cas, chaque échantillon peut alors être attribué lors de l'étape E8 à l'ensemble d'échantillons associé à l'intervalle contenant la valeur de l'échantillon concerné.

D'autres méthodes de répartition peuvent être utilisées à l'étape E8 dans le cadre de ce troisième mode de réalisation. Par exemple, lorsque le signal décodé SD représente un contenu visuel comprenant une image, la répartition peut être réalisée selon l'une des possibilités suivantes :
- pour chaque pixel (c'est-à-dire pour chaque échantillon), la luminance du pixel concerné est comparée à un seuil de luminance (prédéterminé ou, en variante, défini par un paramètre à transmettre au dispositif de reconstruction de contenu), et le pixel est attribué à un premier ensemble d'échantillons si la luminance du pixel concerné est inférieure au seuil de luminance et à un second ensemble d'échantillons si la luminance du pixel concerné est supérieure (ou égale) au seuil de luminance ;
- pour chaque pixel, une valeur de gradient local et une valeur d'angle local sont déterminées (en fonction des valeurs du pixel et des pixels voisins) et le pixel est attribué à un ensemble d'échantillons en fonction de la valeur de gradient local et de la valeur d'angle local déterminées (chaque ensemble d'échantillons pouvant correspondre, de manière prédéterminée ou paramétrable comme déjà indiqué, à un intervalle de valeurs possibles du gradient local et à un intervalle de valeurs possibles de l'angle local) ;
- pour chaque pixel, un filtrage de Sobel est effectué et le pixel est attribué à un ensemble d'échantillons en fonction de la valeur produite par le filtrage de Sobel pour ce pixel (les différents ensembles d'échantillons étant associés respectivement à des plages de valeurs de sortie du filtrage de Sobel de manière prédéterminée ou paramétrable au moyen de paramètres de classification comme indiqué ci-dessus) ;
- les valeurs respectives des échantillons sont appliquées en entrée d'un réseau de neurones artificiels de classification prédéterminé, qui produit en sortie une information de classification pour chaque échantillon, un échantillon étant alors attribué à un ensemble d'échantillons en fonction de l'information de classification produite par le réseau de neurones artificiels de classification pour cet échantillon. Le réseau de neurones artificiels de classification peut par exemple en pratique être similaire à celui proposé dans l'article *"*Elastic Interaction Energy Loss for Traffic Image Segmentation", de Y. Feng et al., disponible à l'adresse internet https://arxiv.org/abs/2310.01449. Un tel réseau de neurones artificiels peut segmenter les pixels d'une image en différentes classes, chaque classe correspondant, dans l'article, à un objet spécifique de l'image (piéton, trottoir, voiture), l'apprentissage se
faisant à partir d'une vérité terrain connue. Un tel réseau de neurones artificiels peut ainsi apprendre à classifier les échantillons du signal décodé SD (ici les pixels de l'image concernée) en différentes classes, chaque classe comportant les pixels aptes à être traités indépendamment des autres pixels.

Selon un quatrième mode de réalisation, l'étape E8 comprend un apprentissage d'un réseau de neurones artificiels de classification et la répartition des échantillons au sein des ensembles d'échantillons est réalisée par application des valeurs des échantillons du signal décodé SD (représentant par exemple une image) en entrée du réseau de neurones artificiels de classification de manière à produire en sortie, pour chaque échantillon, une information de classification indiquant l'ensemble d'échantillons auquel l'échantillon est attribué.

En pratique, l'apprentissage du réseau de neurones artificiels de classification utilisé dans ce quatrième mode de réalisation peut être réalisé conjointement à l'apprentissage (décrit plus loin) des réseaux de neurones artificiels au sein de l'unité d'apprentissage 18. Par exemple, les étapes E8 et E10 sont répétées pour mettre en oeuvre plusieurs fois, tour à tour, une phase d'apprentissage du réseau de neurones artificiels de classification et une phase d'apprentissage des réseaux de neurones artificiels comme prévu au sein de l'unité d'apprentissage 18, jusqu'à permettre une convergence telle que celle décrit à l'étape E10.

Une fois l'apprentissage du réseau de neurones artificiels de classification terminé, les paramètres (y compris les poids WC) définissant ce réseau de neurones artificiels de classification peuvent être utilisés comme données de répartition (pour transmission au dispositif de reconstruction de contenu 30 comme déjà indiqué).

Le procédé de la figure 2 comprend alors une étape d'apprentissage E10 au cours de laquelle est déterminé, pour chaque ensemble d'échantillons, un jeu de paramètres Pi définissant un réseau de neurones artificiels associé à l'ensemble d'échantillons concerné et minimisant une distance entre les valeurs (utilisées comme valeurs de référence) associées aux échantillons de l'ensemble concerné au sein du signal initial SO (signal de référence) et des valeurs améliorées obtenues par traitement, au moyen de ce réseau de neurones artificiels, des valeurs associées aux échantillons de l'ensemble concerné au sein du signal décodé SD.

Comme déjà indiqué, la distance susmentionnée est par exemple une erreur quadratique, une distance utilisant la norme L1 (ou distance de Manhattan) ou un rapport signal-à-bruit.

L'étape d'apprentissage E10 est ici mise en oeuvre par l'unité d'apprentissage 18.

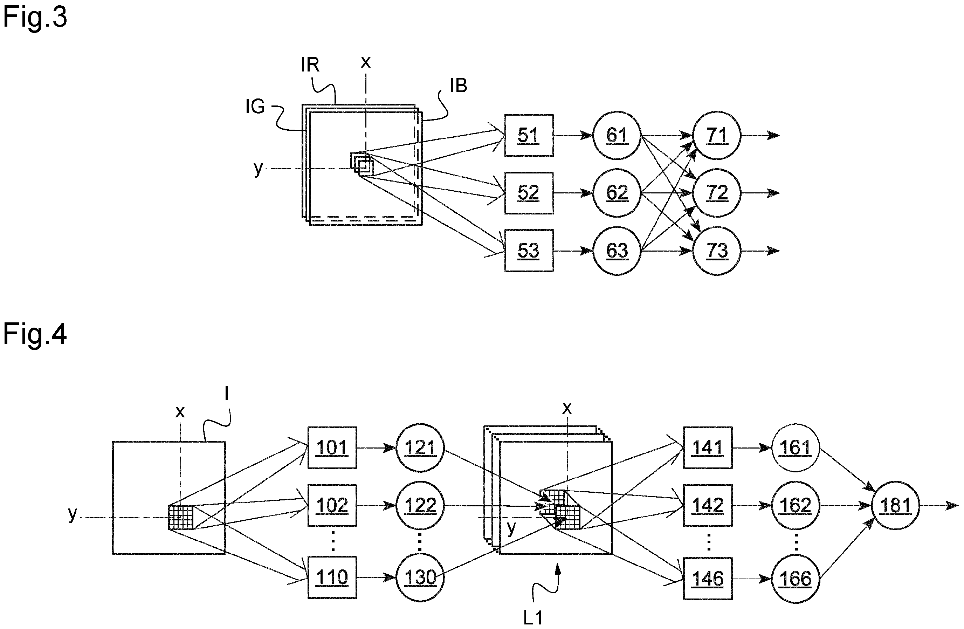

Des exemples de réseaux de neurones artificiels utilisables sont décrits dans la suite en référence aux figures 3 et 4.

Pour chaque ensemble d'échantillons, l'étape E10 comprend par exemple les sous-étapes suivantes :
- fourniture des valeurs des échantillons de l'ensemble d'échantillons concerné dans le signal décodé SD (c'est-à-dire par exemple des valeurs des pixels de l'ensemble concerné au sein du signal décodé SD lorsque le contenu contient au moins une image) en entrée du réseau de neurones artificiels associé à l'ensemble d'échantillons concerné de manière à produire en sortie des valeurs améliorées respectivement associés aux échantillons (i.e. aux pixels dans le cas indiqué ci-dessus) de l'ensemble d'échantillons ;
- pour chaque échantillon (ou pixel) de l'ensemble d'échantillons concerné, calcul de la différence (ou erreur) entre la valeur améliorée associée à cet échantillon et la valeur de cet échantillon au sein du signal initial SO (signal de référence), de manière à définir une distance sur la base des différences (ou erreurs) calculées pour les différents échantillons de l'ensemble d'échantillons concerné ;
- mise à jour des poids du réseau de neurones artificiels pour réduire cette distance, par exemple par rétropropagation du gradient.

Ces trois sous-étapes peuvent être répétées jusqu'à vérification d'un critère de convergence : on peut vérifier par exemple si la distance susmentionnée est inférieure à un seuil de distance (et répéter les trois sous-étapes tant que ce n'est pas le cas).

Lorsque le critère de convergence est vérifié, les poids courants (qui résultent de la dernière sous-étape de mise à jour) sont utilisés comme paramètres Pi définissant le réseau de neurones artificiels à utiliser pour traiter les valeurs des échantillons de l'ensemble d'échantillons concerné au sein du dispositif de reconstruction de contenu 30.

L'étape E10 permet ainsi l'apprentissage d'un réseau de neurones artificiels (et ainsi la détermination du jeu de paramètres Pi caractérisant ce réseau de neurones artificiels) pour chaque ensemble d'échantillons.

Comme déjà indiqué, dans le cadre du quatrième mode de réalisation de la répartition prévue l'étape E8, une phase d'apprentissage du réseau de neurones artificiels de classification peut être mise en oeuvre entre deux itérations successives de l'apprentissage prévu à l'étape E10 (cet apprentissage comprenant ici, pour chaque ensemble d'échantillons, la mise en oeuvre des trois sous-étapes décrites ci-dessus).

Le procédé de la figure 2 comprend alors une étape E12 de codage des jeux de paramètres Pi respectivement obtenus à l'étape E10 pour les différents ensembles d'échantillons. Ce codage est par exemple réalisé conformément à la norme MPEG7 partie 17 comme déjà indiqué.

L'étape de codage E12 produit ainsi, pour chaque ensemble d'échantillons, des données NNCi représentatives des paramètres définissant le réseau de neurones artificiels associé à cet ensemble d'échantillons.

Le procédé de la figure 2 comprend alors une étape E14 de transmission du signal codé SC et des données représentatives NNCi (relatives aux différents ensembles d'échantillons), ainsi qu'éventuellement des données de répartition WC, à destination du dispositif de reconstruction de contenu 30 (via le canal de communication déjà mentionné). Cette étape de transmission E14 peut être mis en oeuvre par l'unité de communication susmentionnée (non représentée) du dispositif de codage 10.

Les données transmises à l'étape E14 peuvent également comprendre un indicateur (par exemple sous forme d'information binaire) indiquant que des données représentatives NNCi sont présentes parmi les données transmises.

Le signal codé SC, les donnée représentatives NNCi et, éventuellement, les données de répartition WC sont reçus par le dispositif de reconstruction de contenu 30 (précisément par l'unité de réception susmentionnée, non représentée, du dispositif de reconstruction de contenu 30) au cours d'une étape de réception E16.

Lorsqu'un indicateur tel que mentionné ci-dessus est utilisé, on peut prévoir, au cours de l'étape E16, de tester la valeur de cet indicateur : si l'indicateur indique une absence de données représentatives NNCi, le procédé met en oeuvre seulement l'étape de décodage E18 (décrite ci-dessous) ; si l'indicateur indique la présence des données représentatives NNCi, le procédé met en oeuvre l'ensemble des étapes décrites ci-dessous et notamment l'étape de répartition E20, l'étape E22 de décodage des données représentatives NNCi et l'étape de traitement E24.

Le procédé de la figure 2 peut alors comprendre une étape E18 de décodage du signal codé SC de manière à obtenir le signal décodé SD. (Le signal décodé obtenu à l'étape de décodage E6 et le signal décodé obtenu à l'étape de décodage E18 sont identiques dans l'exemple décrit ici. Le décodage de l'étape E6 vise à définir ensuite, par apprentissage à l'étape E10, les réseaux de neurones artificiels respectivement associés aux ensembles d'échantillons, tandis que le décodage de l'étape E18 participe à la reconstruction du contenu sonore ou visuel par le dispositif de reconstruction de contenu 30.)

L'étape de décodage E18 est ici mise en oeuvre par l'unité de décodage de contenu 32.

Comme déjà indiqué à propos de l'étape E6, la technique de décodage utilisée lors de l'étape E18 est associée à la technique de codage (ou technique de compression) utilisée lors de l'étape E4.

Le procédé de la figure 2 comprend alors une étape E20 de répartition des échantillons au sein d'une pluralité d'ensembles d'échantillons. Cette étape de répartition E20 est ici mise en oeuvre par l'unité de répartition 34.

Cette répartition est réalisée de la même manière qu'au codage, c'est-à-dire de la même manière que la répartition effectuée à l'étape E8, afin d'obtenir une répartition identique des échantillons au sein des ensembles d'échantillons qu'au codage.

On retrouve donc pour l'étape E20 les différents modes de réalisation envisageables décrits plus haut à propos de l'étape E8.

Lorsque le premier mode de réalisation est utilisé, les échantillons du signal décodé SD sont répartis au sein d'un nombre prédéterminé N d'ensembles d'échantillons, selon une règle prédéterminée utilisant la position de chaque échantillon au sein du signal.

Par exemple, lorsque le signal décodé SD représente un contenu visuel comprenant une image, l'image est divisée en blocs de pixels adjacents (ou contigus) de dimensions WxH prédéfinies et chaque bloc de pixels ainsi constitué forme un ensemble d'échantillons.

Lorsque le second mode de réalisation est utilisé, l'unité de répartition 34 utilise les données de répartition indiquant le nombre d'ensembles d'échantillons et/ou la méthode de répartition, et répartit les échantillons au sein des d'ensembles d'échantillons selon une règle déterminée à l'aide des données de répartition, sur la base ici de la position de chaque échantillon au sein du signal.

Par exemple, lorsque le signal décodé SD représente un contenu visuel comprenant une image, l'image est divisée en blocs de pixels adjacents (ou contigus) dont les dimensions sont déterminées (ou, autrement dit, dont la taille est déterminée) en fonction des données de répartition reçues, et chaque bloc de pixels ainsi constitué forme un ensemble d'échantillons.

Selon une possibilité de réalisation, l'unité de répartition 34 reçoit (en tant que donnée de répartition, en provenance ici de la première unité de répartition 16) et décode une information représentative du nombre d'ensembles d'échantillons utilisés. Dans le cas indiqué ci-dessus où le signal décodé SD représente un contenu visuel comprenant une image, l'image est par exemple divisée en blocs de pixels adjacents sur la base du nombre d'ensemble d'échantillons représenté par l'information reçue et décodée. Autrement dit, les dimensions des blocs de pixels sont déterminées en fonction des dimensions de l'image et de ce nombre d'ensembles d'échantillons selon une règle prédéfinie.

Lorsque le troisième mode de réalisation est utilisé, les échantillons sont répartis au sein des ensembles d'échantillons selon une règle (ou au moyen d'un processus de classification) utilisant les valeurs respectivement associées aux échantillons.

Comme indiqué à propos de l'étape E8, cette règle ou ce processus de classification peut être prédéterminé(e) ou paramétré(e) par des paramètres de classification.

Dans ce second cas, l'étape E20 comprend une sous-étape de réception (par l'unité de répartition 34) de données de répartition, ici des paramètres de classification. La répartition des échantillons au sein de la pluralité d'ensembles d'échantillons est alors réalisée au moyen d'un processus de classification (ou d'une règle) paramétré(e) par les paramètres de classification reçus.

Divers exemples de telles méthodes de répartition sont donnés dans le cadre de la description de l'étape E8. La méthode de répartition utilisée lors de l'étape E20 peut donc avoir les caractéristiques de l'une de ces méthodes données à titre d'exemple pour l'étape E8.

Lorsque le quatrième mode de réalisation est utilisé, l'unité de répartition 34 décode les données de répartition reçues pour obtenir les paramètres (y compris les poids WC) définissant le réseau de neurones artificiels de classification, et utilise le réseau de neurones artificiels de classification défini par ces paramètres pour répartir les échantillons du signal décodé SD au sein des différents ensembles d'échantillons : les valeurs des échantillons du signal décodé SD sont par exemple fournies en entrée du réseau de neurones artificiels de classification défini par les paramètres WC reçus de manière à produire en sortie, pour chaque échantillon, une information de classification indiquant l'ensemble d'échantillons auquel l'échantillon est attribué.

Le procédé de la figure 2 comprend alors une étape E22 au cours de laquelle, pour chaque ensemble d'échantillons construit à l'étape E20, les données NNCi sont décodées (ici par l'unité de décodage de paramètres 36) de manière à obtenir les paramètres Pi définissant le réseau de neurones artificiels associé à cet ensemble d'échantillons. Ce décodage est par exemple réalisé conformément à la norme MPEG-7 partie 17 comme déjà indiqué. Dans l'exemple décrit ici, cette étape de décodage E22 est réalisée par l'unité de décodage de paramètres 36.

Selon une possibilité de réalisation, les paramètres Pi (et ainsi le réseau de neurones artificiels défini par ces paramètres Pi) peuvent être associés de manière prédéterminée aux différents ensembles d'échantillons. Par exemple, lorsque le contenu comprend au moins une image et que les ensembles d'échantillons correspondent à des blocs de pixels de l'image, l'unité de décodage de paramètres 36 peut recevoir successivement des blocs de données représentatives NNCi représentant respectivement des jeux de paramètres Pi qui sont alors associés successivement aux différents blocs de pixel ordonnés selon un ordre prédéfini (tel qu'un ordre de balayage de trame, ou *"raster scan order"* selon la termine anglo-saxonne fréquemment employée).

Selon une autre possibilité de réalisation, l'étape E22 comprend une sous-étape d'association au cours de laquelle chaque jeu de paramètres Pi obtenu sur la base d'un bloc de données représentatives NNCi, et ainsi le réseau de neurones artificiels défini par ce jeu de paramètres Pi, sont associés à un ensemble d'échantillons sur la base par exemple d'une table d'association mémorisée dans le dispositif de reconstruction de contenu 30 ou reçue lors de l'étape E16 décrite plus haut.

Les paramètres Pi ainsi obtenus pour un réseau de neurones artificiels (et donc relatifs à un ensemble d'échantillons) forment un jeu de paramètres et peuvent inclure des paramètres définissant la topologie du réseau de neurones artificiels et/ou des paramètres de poids (c'est-à-dire plus simplement, des poids) respectivement associés à des neurones du réseau de neurones artificiels et/ou des paramètres de filtre définissant un ou plusieurs filtre(s) associé(s) au réseau de neurones artificiels.

Selon une possibilité de réalisation, la structure ou topologie du réseau est prédéterminée (fixe) et les paramètres Pi relatifs à un ensemble d'échantillons incluent des poids (ou paramètres de poids) associés à des neurones du réseau de neurones artificiels associé à l'ensemble d'échantillons et/ou des paramètres de filtre définissant au moins un filtre associé à ce réseau de neurones artificiels.

En pratique, dans certains modes de réalisation, notamment lorsque le codage des paramètres réalisé à l'étape E12 réalise une compression, les paramètres obtenus à l'étape E22 peuvent différer légèrement des paramètres produits à l'étape E10. Toutefois, cette éventuelle différence n'altère pas sensiblement le traitement effectué à l'étape E24 décrite ci-dessous et il n'en sera donc pas tenu compte dans le cadre de la présente description.

Le procédé de la figure 2 se poursuit par une étape E24 au cours de laquelle, pour chaque ensemble d'échantillons, les valeurs des échantillons de cet ensemble d'échantillons sont traitées au moyen du réseau de neurones artificiels associé à cet ensemble d'échantillons, c'est-à-dire défini par les paramètres Pi obtenus à l'étape E22 pour cet ensemble d'échantillons.

L'étape E24 est ici mise en oeuvre par l'unité de traitement 38.

Les valeurs des échantillons (par exemple des pixels) compris dans l'ensemble d'échantillons concerné sont par exemple donnés (éventuellement par l'intermédiaire d'un filtre comme décrit ci-après) à une couche d'entrée du réseau de neurones artificiels associé à cet ensemble d'échantillons ; le réseau de neurones artificiels concerné peut dans ce cas produire, sur une couche de sortie, des valeurs traitées respectivement relatives aux échantillons compris dans ce même ensemble d'échantillons.

L'application d'un tel traitement pour l'ensemble des échantillons permet ainsi de produire des valeurs traitées respectivement associées à tous les échantillons du signal (c'est-à-dire par exemple à tous les pixels d'une image), l'ensemble de ces valeurs traitées formant le signal de sortie SA déjà mentionné, c'est-à-dire un nouveau signal représentatif du contenu sonore ou visuel.

La figure 3 représente un premier exemple de réseau de neurones artificiels utilisable pour le traitement envisagé ci-dessus au sein de l'unité de traitement 38 et au cours de l'étape de traitement E24.

On se place ici dans le cas où le contenu est un contenu visuel contenant au moins une image I définie par trois composantes de couleur IR, IG, IB ; le réseau de neurones artificiels décrit à présent est conçu pour traiter un pixel (c'est-à-dire un échantillon) de l'image. On note ci-après x, y les coordonnées de ce pixel dans l'image.

Le réseau de neurones artificiels représenté sur la figure 3 comprend trois filtres 51, 52, 53, une première couche (formant ici la couche d'entrée) comprenant trois neurones 61, 62, 63, et une seconde couche (formant ici la couche de sortie) comprenant trois neurones 71, 72, 73.

Chaque filtre 51, 52, 53 est ici défini par 27 paramètres de pondération.

Chaque filtre 51, 52, 53 reçoit en entrée, pour chacune des trois composantes de couleur IR, IG, IB, les valeurs des pixels d'un bloc de pixels de dimensions 3x3 centré sur le pixel traité (de coordonnées x,y), soit au total 27 valeurs reçues en entrée.

Chacun des filtres 51, 52, 53 produit en sortie la somme des valeurs qu'il reçoit en entrée respectivement pondérées par les paramètres de pondération du filtre concerné.

Les sommes pondérées respectivement produites en sortie des (ici trois) filtres 51, 52, 53 sont respectivement appliquées sur les trois neurones 61, 62, 63 de la première couche.

Chaque neurone 61, 62, 63 de la première couche applique (à la somme pondérée reçue en entrée) une fonction d'activation, ici de type linéaire rectifiée.

Pour chaque neurone 61, 62, 63 de la première couche, la valeur produite en sortie est donc nulle si la somme pondérée reçue en entrée est négative et égale à la somme pondérée reçue en entrée si cette somme pondérée est positive.

Comme visible sur la figure 3, la valeur produite en sortie de chaque neurone 61, 62, 63 de la première couche est appliquée en entrée de chacun des trois neurones 71, 72, 73 de la seconde couche.

Chaque neurone 71, 72, 73 de la seconde couche est défini par trois coefficients de pondération (ou poids) : chaque neurone 71, 72, 73 de la seconde couche calcule la somme pondérée des trois valeurs qu'il reçoit en entrée (respectivement en provenance des trois neurones 61, 62, 63 de la première couche), ces trois valeurs étant respectivement pondérées par les trois coefficients de pondération du neurone concerné ; chaque neurone 71, 72, 73 de la seconde couche applique à la somme pondérée ainsi calculée une fonction d'activation, ici de type linéaire rectifiée, de manière à produire en sortie une valeur traitée. Cette valeur traitée est donc ici nulle si la somme pondérée calculée par le neurone concerné est négative, et égale à la somme pondérée calculée par le neurone concerné si cette somme pondérée est positive.

Les valeurs traitées respectivement produites en sortie par les trois neurones 71, 72, 73 de la seconde couche sont les valeurs obtenues par traitement par le réseau de neurones artificiels respectivement pour les trois composantes de couleur du pixel de coordonnées (x,y).

Comme déjà indiqué, le réseau de neurones artificiels de la figure 3 permet le traitement relatif à un pixel de coordonnées (x,y), c'est-à-dire à un échantillon dans chaque composante de couleur.

Lors de son utilisation au sein de l'unité de traitement 38 ou au cours de l'étape E24, ce même réseau de neurones artificiels est donc appliqué à chacun des échantillons (ou pixels) de l'ensemble d'échantillons associé à ce réseau de neurones artificiels, de manière à obtenir des valeurs traitées pour tous les échantillons (pixels) de l'ensemble d'échantillons concerné.

Dans le présent exemple, les paramètres Pi définissant le réseau de neurones artificiels sont :
- les paramètres de pondération (ici 27 paramètres de pondération pour chaque filtre, soit 81 paramètres de pondération) définissant les filtres 51, 52, 53 ;
- les coefficients de pondération (ici 3 coefficients de pondération pour chaque neurone, soit 9 coefficients de pondération) définissant les neurones 71, 72, 73 de la seconde couche.

Dans le présent exemple, chaque jeu de paramètres Pi définissant un réseau de neurones artificiels comprend ainsi 90 paramètres.

Ces paramètres Pi sont déterminés lors de l'étape d'apprentissage E10 et/ou par l'unité d'apprentissage 18. On note à cet égard que les valeurs de sortie des trois neurones 71, 72, 73 de la seconde couche sont respectivement relatives aux trois composantes de couleur du fait que l'erreur (ou distance) minimisée lors de la phase d'apprentissage dépend des différences respectives entre chaque valeur de sortie et une valeur de référence du pixel concerné dans une composante donnée.

La figure 4 représente un second exemple de réseau de neurones artificiels utilisable pour le traitement envisagé ci-dessus au sein de l'unité de traitement 38 et au cours de l'étape de traitement E24.

On se place ici dans le cas où le contenu est une image I en niveaux de gris, définie par des valeurs de luminance respectivement associées aux pixels (ou échantillons) de l'image.

Comme expliqué ci-dessous, le réseau de neurones artificiels de la figure 4 est conçu pour traiter un pixel particulier de coordonnées (x,y), en utilisant toutefois pour ce faire non seulement la valeur de ce pixel, mais en outre des valeurs de pixels voisins.

Le réseau de neurones artificiels de la figure 4 comprend dix premiers filtres 101, 102, ..., 110, une première couche (ou couche d'entrée) comprenant dix neurones 121, 122, ..., 130, six seconds filtres 141, 142, ..., 146, une seconde couche comprenant six neurones 161, 162, ..., 166 et un neurone de sortie 181 (formant une couche de sortie).

Chaque premier filtre 101, 102, ..., 110 est défini par 25 coefficients de pondération.

Chaque premier filtre 101, 102, ..., 110 reçoit en entrée les valeurs (de luminance) des pixels d'un bloc de pixels de dimensions 5x5 centré sur le pixel traité (de coordonnées x,y), soit au total 25 valeurs reçues en entrée.

Chacun des premiers filtres 101, 102, ... , 110 produit en sortie la somme des valeurs qu'il reçoit en entrée respectivement pondérées par les paramètres de pondération du premier filtre concerné.

Les sommes pondérées respectivement produites en sortie des (ici dix) premiers filtres 101, 102, ..., 110 sont respectivement appliquées sur les dix neurones 121, 122, ..., 130 de la première couche.

Chaque neurone 121, 122, ..., 130 de la première couche applique (à la somme pondérée reçue en entrée) une fonction d'activation, ici de type linéaire (c'est-à-dire une fonction d'activation f définie par f(x)=a.x avec a une constante non nulle).

La sortie de chaque neurone 121, 122, ..., 130 de la première couche est utilisée comme valeur latente relative au pixel concerné (pixel de coordonnées (x,y)).

La première couche de neurones produit donc ici dix valeurs latentes relatives au pixel de coordonnées (x,y) qui sont mémorisées au sein d'une table (ou *"couche latente"*) L1.

Le traitement qui vient d'être décrit est effectué pour tous les pixels de l'image afin que la table L1 mémorise, pour tous les pixels de l'image, une pluralité de valeurs latentes (ici dix valeurs latentes).

Chaque second filtre 141, 142, ..., 146 est défini par 250 coefficients de pondération.

Chaque second filtre 141, 142, ..., 146 reçoit en entrée les (ici dix) valeurs latentes (mémorisées dans la table L1) relatives aux pixels d'un bloc de pixels de dimensions 5x5 centré sur le pixel traité (de coordonnées x,y), soit au total 250 valeurs latentes reçues en entrée.

Chacun des seconds filtres 141, 142, ..., 146 produit en sortie la somme des valeurs qu'il reçoit en entrée respectivement pondérées par les paramètres de pondération du second filtre concerné.

Les sommes pondérées respectivement produites en sortie des (ici six) seconds filtres 141, 142, ..., 146 sont respectivement appliquées sur les six neurones 161, 162, ..., 166 de la seconde couche.

Chaque neurone 161, 162, ..., 166 de la seconde couche applique (à la somme pondérée reçue en entrée) une fonction d'activation, ici de type linéaire rectifiée.

Pour chaque neurone 161, 162, ..., 166 de la seconde couche, la valeur produite en sortie est donc nulle si la somme pondérée reçue en entrée est négative, et égale à la somme pondérée reçue en entrée si cette somme pondérée est positive.

Les valeurs respectivement produites en sortie des neurones 161, 162, ..., 166 de la seconde couche sont appliquées en entrée du neurone de sortie 181.

Le neurone de sortie 181 calcule la sommes des valeurs reçues en entrée, pondérées chacune par un poids respectif w1, w2, ..., w6, et applique une fonction d'activation, ici de type linéaire rectifiée, à la somme pondérée calculée. La valeur produite en sortie du neurone de sortie 181 est donc nulle si la somme pondérée calculée par le neurone de sortie 181 est négative, et égale à la somme pondérée calculée par le neurone de sortie 181 si cette somme pondérée est positive.

La valeur produite en sortie du neurone de sortie 181 est la valeur traitée produite par le réseau de neurones artificiels de la figure 4.

Lors de son utilisation au sein de l'unité de traitement 38 ou au cours de l'étape E24, le même réseau de neurones artificiels est donc appliqué à chacun des échantillons (ou pixels) de l'ensemble d'échantillons associé à ce réseau de neurones artificiels, de manière à obtenir des valeurs traitées pour tous les échantillons (pixels) de l'ensemble d'échantillons concerné.

Dans le présent exemple, les paramètres Pi définissant le réseau de neurones artificiels sont :
- les paramètres de pondération (ici 25 paramètres de pondération pour chaque premier filtre, soit 250 paramètres de pondération) définissant les premiers filtres 101, 102, ..., 110 ;
- les paramètres de pondération (ici 250 paramètres de pondération pour chaque second filtre, soit 1500 paramètres de pondération) définissant les seconds filtres 141, 142, ..., 146 ;
- les poids (ici 6 poids w1, w2, ..., w6) définissant le neurone de sortie 181.

Dans le présent exemple, chaque jeu de paramètres Pi définissant un réseau de neurones artificiels comprend ainsi 1756 paramètres.

Ces paramètres Pi sont déterminés lors de l'étape d'apprentissage E10 et/ou par l'unité d'apprentissage 18.

D'autres modes de réalisation que ceux décrits ci-dessus sont envisageables, en particulier en ce qui concerne la topologie des réseaux de neurones utilisés.

Le réseau de neurones artificiels utilisé pour le traitement envisagé ci-dessus au sein de l'unité de traitement 38 et au cours de l'étape de traitement E24 peut par exemple être un perceptron multicouche tel que décrit dans l'article *"An Overview on Multilayer Perceptron (MLP)"* de Mayank Banoula (disponible à l'adresse https://www.simplileam.com/tutorials/deep-learninq-tutorial/multilayer-perceptron).

Selon une autre variante, on peut utiliser des réseaux récurrents tels que décrits dans la publication *"*Text-To-Speech Conversion with Neural Networks: A Recurrent TDNN Approach" de Orhan Karaali, Gerald Corrigan, Ira Gerson et Noel Massey, in Proceedings of Eurospeech (1997), Rhodes, Grèce, pp. 561-564.

On peut par ailleurs utiliser une couche entièrement connectée (ou *"fully-connected layer"* selon l'appellation anglo-saxonne) au sein du réseau de neurones artificiels.

## Revendications

1. Procédé de traitement de valeurs associées à des échantillons d'un signal (SD) représentatif d'un contenu sonore ou visuel, comprenant les étapes suivantes :
- répartition (E20) des échantillons au sein d'une pluralité d'ensembles ;
- pour certains au moins des ensembles de la pluralité d'ensembles, décodage (E22) de données (NNCi) représentatives de paramètres (Pi) définissant un réseau de neurones artificiels associé à l'ensemble concerné et traitement (E24) des valeurs associées aux échantillons de l'ensemble concerné au moyen du réseau de neurones artificiels défini par lesdits paramètres (Pi) de manière à produire des valeurs traitées respectivement associées aux échantillons de l'ensemble concerné.

2. Procédé de traitement selon la revendication 1, dans lequel le signal est représentatif d'au moins une image et dans lequel les ensembles sont des blocs de pixels contigus de l'image.

3. Procédé de traitement selon la revendication 2, comprenant une étape préalable de détermination d'au moins une taille desdits blocs.

4. Procédé de traitement selon la revendication 1, dans lequel la répartition des échantillons au sein de la pluralité d'ensembles est réalisée au moyen d'un processus de classification prédéterminé.

5. Procédé de traitement selon la revendication 1, comprenant une étape préalable de réception de paramètres de classification, dans lequel la répartition des échantillons au sein de la pluralité d'ensembles est réalisée au moyen d'un processus de classification paramétré par les paramètres de classification reçus.

6. Procédé de traitement selon la revendication 1, comprenant une étape préalable de décodage de poids (WC) définissant un réseau de neurones artificiels de classification, dans lequel la répartition des échantillons au sein de la pluralité d'ensemble est réalisée au moyen dudit réseau de neurones artificiels de classification.

7. Procédé de traitement selon l'une des revendications 1 à 6, dans lequel le réseau de neurones artificiels défini par lesdits paramètres (Pi) comprend au maximum trois couches incluant une couche d'entrée et une couche de sortie.

8. Procédé de traitement selon l'une des revendications 1 à 7, comprenant une étape préalable de décodage d'une information représentative du nombre d'ensembles dans la pluralité d'ensembles.

9. Procédé de traitement selon l'une des revendications 1 à 8, comprenant une étape préalable de décodage d'un indicateur commandant la mise en oeuvre des étapes de répartition, de décodage desdites données représentatives et de traitement.

10. Procédé selon l'une des revendications 1 à 9, dans lequel lesdites valeurs associées aux échantillons dudit signal (SD) sont obtenues par décodage d'un flux de données codé par une technique de compression avec perte.

11. Procédé selon l'une des revendications 1 à 10, dans lequel les réseaux de neurones artificiels respectivement associés auxdits ensembles ont une structure prédéterminée.

12. Procédé selon l'une des revendications 1 à 11, comprenant une étape préalable d'association du réseau de neurones artificiels à l'ensemble concerné sur la base d'une table d'association.

13. Dispositif de traitement de valeurs associées à des échantillons d'un signal (SD) représentatif d'un contenu sonore ou visuel, comprenant :
- une unité (34) de répartition des échantillons au sein d'une pluralité d'ensembles ;
- une unité de décodage (36) configurée pour décoder, pour certains au moins des ensembles de la pluralité d'ensembles, des données (NNCi) représentatives de paramètres (Pi) définissant un réseau de neurones artificiels associé à l'ensemble concerné ; et
- une unité de traitement (38) configurée pour traiter les valeurs associées aux échantillons d'au moins un ensemble au moyen du réseau de neurones artificiels défini par lesdits paramètres (Pi) obtenus par l'unité de décodage (36) pour cet ensemble, de manière à produire des valeurs traitées respectivement associées aux échantillons de cet ensemble.

14. Programme d'ordinateur comprenant des instructions exécutables par un processeur et conçues pour mettre en oeuvre un procédé selon l'une des revendications 1 à 12, lorsque ces instructions sont exécutées par le processeur.

15. Procédé de génération de paramètres (Pi) utilisés pour le traitement de valeurs associées à des échantillons d'un signal (SD) représentatif d'un contenu sonore ou visuel, comprenant les étapes suivantes :
- répartition (E8) des échantillons au sein d'une pluralité d'ensembles ;
- pour certains au moins des ensembles de la pluralité d'ensembles, détermination (E10) de paramètres (Pi) définissant un réseau de neurones artificiels associé à l'ensemble concerné et minimisant une distance entre des valeurs de référence associées aux échantillons de l'ensemble concerné au sein d'un signal de référence (SO) et des valeurs améliorées obtenues par traitement, au moyen de ce réseau de neurones artificiels, des valeurs associées aux échantillons dudit signal représentatif (SD) compris dans l'ensemble concerné.

16. Procédé selon la revendication 15, comprenant une étape (E12) de codage des paramètres (Pi) déterminés pour lesdits certains au moins des ensembles de la pluralité d'ensembles.

17. Dispositif de génération de paramètres (Pi) utilisés pour le traitement de valeurs associées à des échantillons d'un signal (SD) représentatif d'un contenu sonore ou visuel, comprenant :
- une unité (16) de répartition des échantillons au sein d'une pluralité d'ensembles ; et
- une unité d'apprentissage (18) configurée pour déterminer, pour certains au moins des ensembles de la pluralité d'ensembles, des paramètres (Pi) définissant un réseau de neurones artificiels associé à l'ensemble concerné et minimisant une distance entre des valeurs de référence associées aux échantillons de l'ensemble concerné au sein d'un signal de référence (SO) et des valeurs améliorées obtenues par traitement, au moyen de ce réseau de neurones artificiels, des valeurs associées aux échantillons dudit signal représentatif (SD) compris dans l'ensemble concerné.
